(19) Europäisches Patentamt
European Patent Office
Office européen des brevets

(11) **EP 2 784 486 A1**

(12) **EUROPEAN PATENT APPLICATION**
published in accordance with Art. 153(4) EPC

(43) Date of publication:
**01.10.2014 Bulletin 2014/40**

(51) Int Cl.:
**G01N 21/49** *(2006.01)*     **G01N 21/17** *(2006.01)*

(21) Application number: **12851172.2**

(22) Date of filing: **24.10.2012**

(86) International application number:
**PCT/JP2012/077469**

(87) International publication number:
**WO 2013/077137 (30.05.2013 Gazette 2013/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2011   JP 2011255782
20.08.2012   JP 2012181474**

(71) Applicant: **National University Corporation
Tokyo University Of Agriculture and Technology
Tokyo 183-8538 (JP)**

(72) Inventors:
• **IWAI, Toshiaki**
  **Fuchu-shi**
  **Tokyo 183-8538 (JP)**
• **WATARAI, Toshiharu**
  **Fuchu-shi**
  **Tokyo 183-8538 (JP)**

(74) Representative: **MERH-IP
Matias Erny Reichl Hoffmann
Paul-Heyse-Strasse 29
80336 München (DE)**

(54) **MEASUREMENT DEVICE AND MEASUREMENT METHOD**

(57)     Light emitted from a low-coherence light source (10) is split into two beams by an optical coupler (20). One of the two beams split by the optical coupler (20) is applied to a sample medium (40). The other of the two beams split by the optical coupler (20) is subjected to phase modulation by a reference mirror (50) and a vibration element (52). The beam (reference beam) subjected to phase modulation and a scattered beam from the sample medium (40) are wavelength-resolved by a diffraction grating (62), and the spectrum of interference light of the reference beam and the scattered beam is detected by a photodetector (70). A calculation section (80) calculates an intensity signal corresponding to the position of each scattering point in the sample medium (40) on the basis of the detected spectrum, calculates a power spectrum corresponding to the position of each scattering point on the basis of a temporal change in the intensity signal corresponding to the position of each scattering point, and calculates a diffusion coefficient of the particles corresponding to the position of each scattering point on the basis of the calculated power spectrum.

FIG.1

**Description**

TECHNICAL FIELD

The present invention relates to a measurement device and a measurement method that perform a dynamic light scattering measurement process to characterize particles suspended in a sample medium.

BACKGROUND ART

Fine polymer particles in a solution are in free diffusive motion (Brownian motion) in a region sufficiently away from the wall surface of the container and in constrained diffusive motion in the vicinity of the wall surface (solid-liquid interface). This phenomenon is referred to as a "wall-drag effect". It comes from the local change in the Stokes viscous force caused by significant hydrodynamic interaction between the wall surface and the solution. Experimental analysis of the effect has been conducted by a dynamic light scattering method. The dynamic light scattering method is used to determine dynamic characteristics of scatterers by a temporal autocorrelation function or a power spectrum of time-varying intensity variations scattered from the suspension under illumination of laser light. The dynamic light scattering method has been widely and conventionally used in particle sizing, monitoring of particle aggregation, and so on. The conventional dynamic light scattering method has been applied to the extremely diluted solution together with the free diffusion region sufficiently away from the interface.

The dynamic light scattering method based on low-coherence interferometry has been known as a technique for observing space-dependent variation in Brownian dynamics of particles from the interfacial region to the free diffusion region (see JP-A-2005-121600, for example). This technique makes it possible to measure the change of the diffusion coefficient that occurs due to the wall-drag effect and depends on the distance from the interface.

SUMMARY OF THE INVENTION

TECHNICAL PROBLEM

When using a known dynamic light scattering method that utilizes low-coherence interferometry, it is necessary to conduct the measurement by mechanically displacing a reference mirror to change the distance from the interface to the scattering point (measurement position). It is therefore impossible to simultaneously measure the change of the diffusion coefficient dependent on the distance from the interface without scanning the reference mirror. The dynamics of particles in the sample medium may be affected by convection in the solution that occurs by being continuously exposed to optical energy during the measurement or the change of concentration of the solution due to evaporation.

The invention was conceived in view of the above technical problem. The purpose of the invention is to provide a measurement device and a measurement method that enable to measure simultaneously and seamlessly the dynamics of Brownian particles in the sample medium that depends on the distance from the interface.

SOLUTION TO PROBLEM

(1) According to one aspect of the invention, a measurement device performs a dynamic light scattering measurement process to characterize particles suspended in a sample medium, the measurement device including:

an optical splitter section that splits light emitted from a low-coherence light source into two beams;
an illumination section that applies one of the two beams split by the optical splitter section to the sample medium;
a phase modulation section that modulates the other of the two beams split by the optical splitter section in phase;
a spectrum acquisition section that resolves the beam subjected to the phase modulation and a scattered beam from the sample medium on a wavelength basis, and acquires a spectrum of interference light of the beam subjected to the phase modulation and the scattered beam; and
a measurement section that performs the dynamic light scattering measurement process to characterize the particles on the basis of the acquired spectrum,
the measurement section calculating an intensity signal corresponding to a position of each scattering point in the sample medium on the basis of the acquired spectrum, calculating a power spectrum corresponding to the position of each scattering point on the basis of a temporal variation of the intensity signal corresponding to the position of each scattering point, and calculating a diffusion coefficient of the particles corresponding to the position of each scattering point on the basis of the calculated power spectrum.

According to another aspect of the invention, a measurement method performs a dynamic light scattering measurement process to characterize particles suspended in a sample medium, the measurement method including:

a process that splits light emitted from a low-coherence light source into two beams, applies one of the two beams to the sample medium, and modulates the other of the two beams in phase;

a process that resolves the beam subjected to the phase modulation and a scattered beam from the sample medium on a wavelength basis, and acquires a spectrum of interference light of the beam subjected to the phase modulation and the scattered beam; and

a measurement process that performs the dynamic light scattering measurement process to characterize the particles on the basis of the acquired spectrum,

the measurement process calculating an intensity signal corresponding to a position of each scattering point in the sample medium on the basis of the acquired spectrum, calculating a power spectrum corresponding to the position of each scattering point on the basis of a temporal variation of the intensity signal corresponding to the position of each scattering point, and calculating a diffusion coefficient of the particles corresponding to the position of each scattering point on the basis of the calculated power spectrum.

According to the above configuration, the beam subjected to the phase modulation and the scattered beam are wavelength-resolved, the spectrum of the interference light of the beam subjected to the phase modulation and the scattered beam is acquired, and the diffusion coefficient of the particles corresponding to the position of each scattering point (distance from the interface) in the sample medium is calculated on the basis of the acquired spectrum of the interference light. This enables to measure simultaneously and seamlessly the dynamic state of the particles in the sample medium that depends on the position of the scattering point.

(2) In the measurement device and the measurement method, the spectrum acquisition section may include (or the process that acquires the spectrum may utilize) a line sensor camera in which a plurality of light-receiving devices are arranged in a row, the spectrum acquisition section (the process that acquires the spectrum) acquiring a detection signal detected by each of the plurality of light-receiving devices of the line sensor camera as the spectrum.

(3) In the measurement device and the measurement method, the measurement section (or the measurement process) may calculate the intensity signal corresponding to the position of each scattering point by calculating an inverse Fourier transform of the spectrum.

(4) In the measurement device and the measurement method, the measurement section (or the measurement process) may calculate the power spectrum corresponding to the position of each scattering point by calculating a Fourier transform of the intensity signal corresponding to the position of each scattering point that varies in time series.

BRIEF DESCRIPTION OF DRAWINGS

FIG. 1 illustrates an example of the configuration of a measurement device according to one embodiment of the invention.

FIG. 2 illustrates the spectrum of interference light detected by one of light-receiving devices arranged in a row in a photodetector.

FIG. 3 illustrates an intensity signal corresponding to the position of each scattering point calculated based on the spectrum of interference light (time is fixed).

FIG. 4 illustrates an example of a power spectrum calculated corresponding to the position of one scattering point.

FIG. 5 illustrates the time correlation function measurement results obtained using a measurement device according to one embodiment of the invention.

FIG. 6 illustrates the diffusion coefficient measurement results for the glass-water interface obtained using a measurement device according to one embodiment of the invention.

FIG. 7 illustrates an example of the configuration of a measurement device according to a modification to observe the wall-drag effect at the air-water interface.

FIG. 8 illustrates the diffusion coefficient measurement results obtained using a measurement device according to a modification to observe the wall-drag effect at the air-water interface.

DESCRIPTION OF EMBODIMENTS

Exemplary embodiments of the invention are described below. Note that the following exemplary embodiments do not unduly limit the scope of the invention as stated in the claims. Note also that all of the elements described in connection with the following exemplary embodiments should not necessarily be taken as essential elements of the invention.

1. Configuration

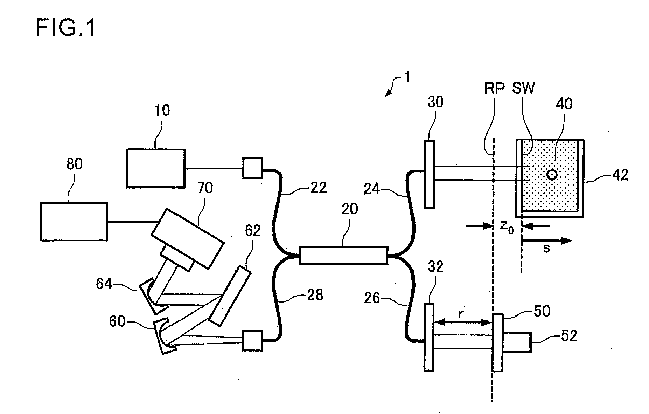

FIG. 1 illustrates an example of the configuration of a measurement device according to one embodiment of the invention. A measurement device 1 according to one embodiment of the invention is configured as a device that performs a dynamic light scattering measurement process to characterize particles suspended in a sample medium 40 (suspension). The measurement device 1 includes a low-coherence light source 10, an optical coupler 20, a reference mirror 50, a vibration element 52, a diffraction grating 62, a photodetector 70, and a calculation section 80, the optical coupler 20 functioning as an optical splitter section, the reference mirror 50 and the vibration element 52 functioning as a phase modulation section, the diffraction grating 62 and the photodetector 70 functioning as a spectrum acquisition section, and the calculation section 80 functioning as a measurement section. The optical system of the measurement device 1 is a Michelson interferometer that utilizes a superluminescent diode (SLD) as the low-coherence light source 10.

Light emitted from the low-coherence light source 10 enters an optical fiber 22, and is split into two beams by the optical coupler 20. One of the two beams split by the optical coupler 20 passes through an optical fiber 24, is collimated by a collimator 30, and is incident on the sample medium 40 contained in a transparent container 42. A backscattered beam from the sample medium 40 passes through the collimator 30 and the optical fiber 24, and enters the optical coupler 20.

The other (reference beam) of the two beams split by the optical coupler 20 passes through an optical fiber 26, is collimated by a collimator 32, and is reflected by the reference mirror 50. The beam reflected by the reference mirror 50 passes through the collimator 32 and the optical fiber 26, and enters the optical coupler 20.

The reference beam and the scattered beam that have left the optical coupler 20 pass through an optical fiber 28, are reflected by a concave mirror 60, and are wavelength-resolved by the diffraction grating 62. The wavelength-resolved reference beam and scattered beam are reflected by a concave mirror 64, enter a photodetector 70, interfere with each other, and are detected as interference light. The photodetector 70 is implemented by a line sensor camera in which a plurality of light-receiving devices are arranged in a row, and detects the spectrum of the interference light. A detection signal (i.e. the spectrum of the interference light) detected by the photodetector 70 is output to the calculation section 80.

The vibration element 52 that subjects the reference beam to phase modulation by vibrating the reference mirror 50 is attached to the reference mirror 50. The vibration element 52 generates sine-wave vibrations at a frequency of 2 kHz and a maximum amplitude of 0.12 micrometers. The vibration element 52 may be implemented by a piezoelectric element (piezo element). It is possible to separate the heterodyne spectrum of a single scattered light component and the homodyne spectrum of a multiple scattered light component by subjecting the reference beam to phase modulation, and allowing the scattered beam to interfere with the reference beam.

The calculation section 80 (computer) calculates the diffusion coefficient of the particles corresponding to the position of each scattering point in the sample medium 40 based on the spectrum of the interference light detected by the photodetector 70.

In FIG. 1, r is the optical path length of the reference beam, $z_0$ is the distance from a reference plane RP to an inner wall surface SW of the container 42 (i.e. the interface between the wall surface of the container 42 and the sample medium 40), and s is the distance from the inner wall surface SW of the container 42 to the particle center (scattering point) in the sample medium 40. $z_0$ is set to about 50 micrometers.

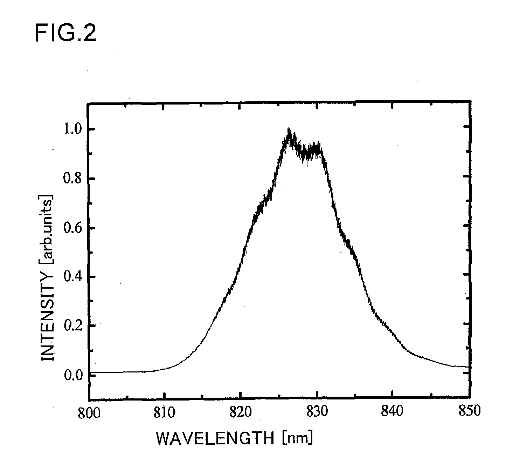

FIG. 2 illustrates the spectrum of the interference light detected by one of light-receiving devices arranged in a row in the photodetector 70. The spectrum of the interference light is detected as a spectrum in which the phase corresponding to the optical path difference between the reference mirror 50 (reference plane RP) and the scattering point is superimposed on the power spectrum of the light source 10.

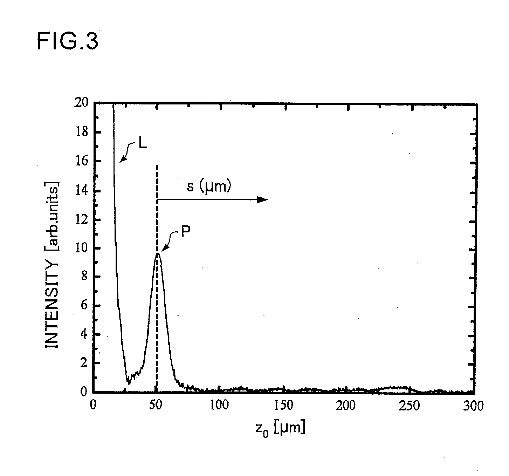

The calculation section 80 calculates the inverse Fourier transform of the detected spectrum of the interference light with respect to the wavenumber space to calculate an intensity signal corresponding to the position of each scattering point (i.e. the distance s from the wall surface SW to each scattering point) in the sample medium 40 (see FIG. 3).

In FIG. 3, the peak P observed at the position at which $z_0$ is about 50 micrometers corresponds to an interference signal that indicates interference between the beam reflected by the reference mirror 50 and the beam from the inner wall surface SW of the container 42. A signal observed at a position at which $z_0$ is more than about 50 micrometers (i.e. s>0) corresponds to an interference signal that indicates interference between the beam reflected by the reference mirror 50 and the backscattered beam from a particle in the sample medium 40. Since the main lobe L observed at a position

at which $z_0$ is 0 to about 25 micrometers includes the autocorrelation term of the sample optical path, a multiple scattered light component is observed at a position at which $z_0$ is 0 to about 25 micrometers. Therefore, it is necessary to place the reference mirror 50 at a distance of about 25 micrometers or more from the position of the inner wall surface SW of the container 42 in order to suppress the effects of multiple scattered light.

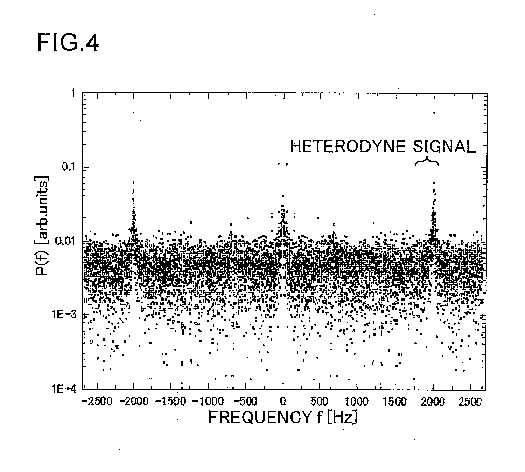

The calculation section 80 calculates the power spectrum corresponding to the position of each scattering point based on a temporal change in the intensity signal corresponding to the position of each scattering point (distance s) in the sample medium 40. Specifically, the calculation section 80 calculates the Fourier transform of the intensity signal (time signal) corresponding to the position of each scattering point that changes with the passage of time to calculate the power spectrum corresponding to the position of each scattering point. FIG. 4 illustrates an example of a power spectrum P(f) calculated corresponding to the position of one scattering point.

In the power spectrum P(f) illustrated in FIG. 4, a homodyne spectrum and a heterodyne spectrum are observed around a position at which the frequency f is 0 Hz. Since the reference beam is subjected to phase modulation by vibrating the reference mirror 50 at a frequency of 2 kHz using the vibration element 52, a heterodyne spectrum is separated around a position at which the frequency f is 2 kHz. The homodyne spectrum is similar to a spectrum measured using a known dynamic light scattering method, and is affected directly by multiple scattering. In contrast, the heterodyne spectrum occurs due to interference between the reference beam and only single scattered light component within the range of the coherence length of the light source.

The calculation section 80 extracts a heterodyne signal at a frequency of 2 kHz from the power spectrum corresponding to the position of each scattering point, and calculates the time correlation function of the heterodyne signal. The time correlation function is approximately limited to the single scattered light component due to the temporal coherence characteristics of the light source. The time correlation function $\gamma(\tau)$ is a monotonous exponential decay function that uses a delay time $\tau$ as a variable, and is represented by the following expression.

$$\gamma(\tau) = \exp\left(-Dq^2\tau\right) \qquad (1)$$

where D is the diffusion coefficient, and q is the magnitude of the scattering vector that is represented by the following expression.

$$q = \frac{4\pi n \sin(\theta/2)}{\lambda_0} \qquad (2)$$

where $\lambda_0$ is the wavelength of the light source, n is the refractive index of the solvent, and $\theta$ is the scattering angle ($\theta$ =about $\pi$ taking account of the geometrical arrangement of the optical system).

The calculation section 80 calculates the diffusion coefficient D corresponding to the position of each scattering point by applying numerical fitting to the time correlation function. A change in diffusive motion of the particles in the sample medium 40 that depends on the distance s can be simultaneously measured by calculating the diffusion coefficient D corresponding to the position of each scattering point (i.e. the distance s from the wall surface SW to each scattering point). The particle size distribution (i.e. the particle size corresponding to the position of each scattering point) in the sample medium 40 can also be simultaneously measured by calculating the particle size from the diffusion coefficient D using the Stokes-Einstein equation.

A theoretical value of the diffusion coefficient $D_w(s)$ that depends on the distance s can be calculated using H. Brenner's equation (see the following expression).

$$\zeta_\perp^{-1}(s) = \frac{D_w(s)}{D_0} = \left\{\frac{4}{3}\sinh\alpha\sum_{n=1}^{\infty}\frac{n(n+1)}{(2n-1)(2n+3)}\left[\frac{2\sinh(2n+1)\alpha+(2n+1)\sin 2\alpha}{4\sinh^2(n+1/2)\alpha-(2n+1)^2\sinh^2\alpha}-1\right]\right\}^{-1}$$

$$(3)$$

where $\alpha=\cosh^{-1}(1+s/R)$, R is the radius of the particle, and $D_0$ is the free diffusion coefficient. The free diffusion coefficient Do is represented by the following expression using the Stokes-Einstein equation.

$$D_0 = \frac{k_B T}{6\pi\eta R} \qquad (4)$$

where $k_B$ is the Boltzmann constant, T is the absolute temperature of the solvent, and $\eta$ is the viscosity of the solvent. The diffusion coefficient $D_w(s)$ is 1 when $s\rightarrow\infty$, and significantly decreases in the vicinity of the wall surface (interface) of the container as the radius R increases (see the expression (3)).

2. Measurement results

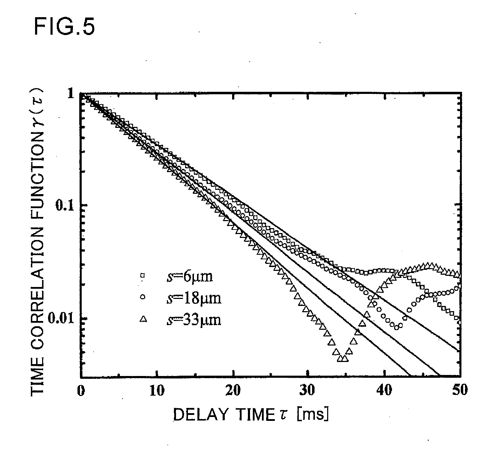

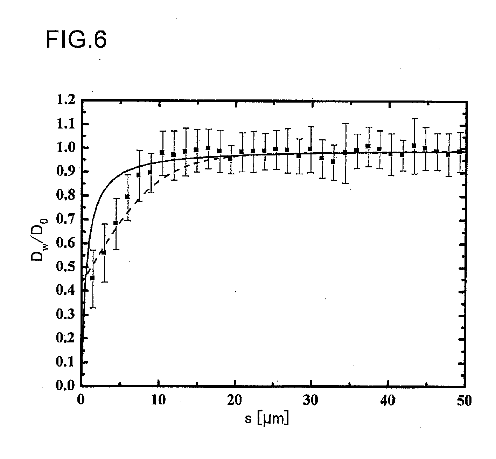

FIGS. 5 and 6 illustrate measurement results obtained by using the measurement device according to one embodiment of the invention. A suspension of polystyrene latex particles having an average radius R of 0.55 micrometers and a volume concentration of 10% was used as the sample medium 40. A SLD having a center wavelength $\lambda_0$ of 827 nm and a full width at half maximum $\Delta\lambda$ of 18 nm was used as the low-coherence light source 10. The coherence length $l_c$ of the light source is calculated to be about 16 micrometers using the following expression.

$$l_c = \frac{2\ln 2}{\pi}\frac{\lambda_0^2}{\Delta\lambda} \qquad (5)$$

When the transport mean free path calculated by the Mie scattering theory is considered to be the inter-particle distance, the inter-particle distance in the suspension of the particles having an average radius R of 0.55 micrometers and a volume concentration of 10% is calculated to be 36.7 micrometers. Since the inter-particle distance is sufficiently larger than the coherence length $l_c$ (= about 16 micrometers) (i.e. the resolution in the optical axis direction) calculated using the expression (5), it is considered that only the single scattered light component can be extracted.

A line sensor camera having a number of pixels of 4096 was used as the photodetector 70. The wavelength resolution per pixel of the line sensor camera is 0.04 nm, and the spatial scan resolution in the optical axis direction (i.e. the resolution with respect to the distance s) is about 2 micrometers.

FIG. 5 illustrates the measurement results for the time correlation function $\gamma(\tau)$ of the amplitude of the backscattered beam measured at a distance s (i.e. the distance from the solid-liquid interface to the particle center (scattering point)) of 6 micrometers, 18 micrometers, or 33 micrometers. In FIG. 5, each solid line indicates the results obtained by nonlinear fitting of the exponential function to the measured time correlation function. As illustrated in FIG. 5, the measured time correlation function showed a monotonous decrease along the negative exponential function, and it was confirmed that only the single scattered light component was detected. As illustrated in FIG. 5, the relaxation time increased with a decrease of the distance s from the solid-liquid interface to the particle center. These results suggest that the Brownian motion of the particle is limited as the distance from the solid-liquid interface decreases.

FIG. 6 illustrates the measurement results of the diffusion coefficient corresponding to the distance s from the solid-liquid interface to the particle center (i.e. the position of the scattering point). In FIG. 6, each black point indicates a value obtained by normalizing the measured diffusion coefficient $D_w$ using the free diffusion coefficient Do of the particle. The average value of the diffusion coefficients measured at a distance of 50 to 100 micrometers from the wall surface of the container was used as the free diffusion coefficient Do. In FIG. 6, the solid line indicates the theoretical value calculated using the expression (3) provided that the average radius R is 0.55 micrometers, and the broken line indicates the value obtained by calculating the convolution integral of the theoretical value and a temporal coherence function g(s) of the light source represented by the following expression. Note that the temporal coherence function of the light source was assumed to be a Gaussian distribution function.

$$g(s) = \exp\left[-4\ln 2\left(\frac{s}{l_c}\right)^2\right] \qquad (6)$$

As illustrated in FIG. 6, the diffusion coefficient measured value $D_w/D_0$ significantly decreased in the vicinity of the solid-liquid interface, and became closer to the maximum value (1.0) along with an increase in the distance from the solid-liquid interface. The diffusion coefficient measured value $D_w/D_0$ coincided well with the results indicated by the broken line (i.e. the theoretical value calculated taking account of the coherence function of the light source). It was thus confirmed that the measurement device according to one embodiment of the invention can accurately measure a change in the diffusion coefficient of the particles that depends on the distance s from the solid-liquid interface. Moreover, the measurement device according to one embodiment of the invention can measure the diffusion coefficient of the particles that depends on the distance s from the solid-liquid interface simultaneously (in real time) without any scanning of the reference mirror in order to change the distance s from the solid-liquid interface.

3. Modifications

The invention is not limited to the above embodiments. Various modifications and variations may be made of the above embodiments. The invention includes configurations that are substantially the same as the configurations described in connection with the above embodiments (e.g. in function, method and effect, or objective and effect). The invention also includes a configuration in which an unsubstantial element among the elements described in connection with the above embodiments is replaced by another element. The invention also includes a configuration having the same effects as those of the configurations described in connection with the above embodiments, or a configuration capable of achieving the same object as those of the configurations described in connection with the above embodiments. The invention further includes a configuration obtained by adding a known technique to the configurations described in connection with the above embodiments.

Although the above embodiments have been described taking an example in which the SLD is used as the low-coherence light source, another low-coherence light source or an ultrashort coherence light source (e.g. white LED) may also be used. Although the above embodiments have been described taking an example in which the reference beam and the scattered beam are wavelength-resolved using the diffraction grating, the reference beam and the scattered beam may be wavelength-resolved using a prism or the like.

Although the above embodiments have been described taking an example in which a change in diffusive motion of fine particles in the vicinity of the solid-liquid interface (i.e. the interface between the wall surface of the container 42 and the sample medium 40) is measured, the invention may also be applied to the case of measuring a change in diffusive motion of fine particles in the vicinity of the gas-liquid interface (i.e. the interface between air and a sample medium). Specifically, the Brownian motion of particles is also limited in the vicinity of the gas-liquid interface.

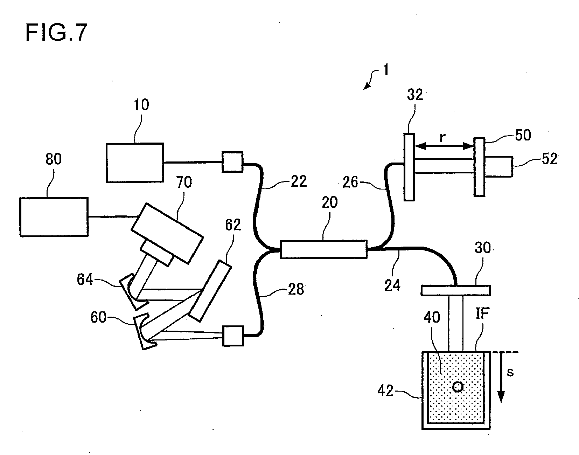

When measuring a change in diffusive motion of fine particles in the vicinity of the gas-liquid interface, the optical system of the measurement device 1 is designed so that one of the two beams split by the optical coupler 20 (parallel beam from the collimator 30) is vertically incident on the sample medium 40 through the upper opening of the transparent container 42 (see FIG. 7). In FIG. 7, s is the distance from a gas-liquid interface IF (i.e. the interface between air and the sample medium 40) to the particle center (scattering point) in the sample medium 40. The diffusion coefficient D corresponding to the position of each scattering point (i.e. the distance s from the gas-liquid interface IF to each scattering point) is calculated in the same manner as described above.

A theoretical value of the diffusion coefficient $D_w(s)$ that depends on the distance s from the gas-liquid interface to the particle center can be calculated using H. Brenner's equation (see the following expression).

$$\zeta_\perp^{-1}(s) = \frac{D_w(s)}{D_0} = \left\{\frac{4}{3}\sinh\alpha\sum_{n=1}^{\infty}\frac{n(n+1)}{(2n-1)(2n+3)}\left[\frac{4\cosh^2(n+1/2)\alpha + (2n+1)^2\sinh^2\alpha}{2\sinh(2n+1)\alpha - (2n+1)\sinh 2\alpha} - 1\right]\right\}^{-1}$$

(7)

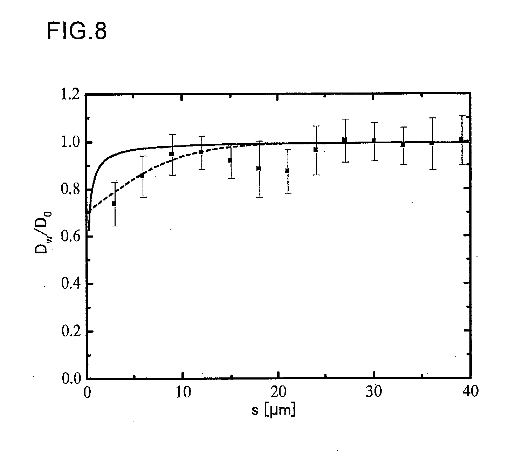

FIG. 8 illustrates the measurement results for the diffusion coefficient corresponding to the distance s from the gas-liquid interface IF to the particle center (i.e. the position of the scattering point) obtained using the measurement device illustrated in FIG. 7. A suspension of polystyrene latex particles having an average radius R of 0.23 micrometers and a volume concentration of 1% was used as the sample medium 40. An SLD having a center wavelength $\lambda_0$ of 827 nm and a full width at half maximum $\Delta\lambda$ of 18 nm was used as the low-coherence light source 10. A line sensor camera having a number of pixels of 2048 was used as the photodetector 70. The spatial resolution of the line sensor camera (i.e. the resolution with respect to the distance s) is about 4 micrometers.

In FIG. 8, each black point indicates a value obtained by normalizing the measured diffusion coefficient $D_w$ using the free diffusion coefficient $D_0$ of the particle. In FIG. 8, the solid line indicates the theoretical value calculated using the expression (7) provided that the average radius R is 0.23 micrometers, and the broken line indicates the value obtained by calculating the convolution integral of the theoretical value and a temporal coherence function g(s) of the light source represented by the expression (6).

As illustrated in FIG. 8, the diffusion coefficient measured value $D_w/D_0$ decreased in the vicinity of the gas-liquid interface, and became closer to the maximum value (1.0) along with an increase in the distance from the gas-liquid interface. The diffusion coefficient measured value $D_w/D_0$ coincided well with the results indicated by the broken line (i.e. the theoretical value calculated taking account of the coherence function of the light source). It was thus confirmed that the measurement device illustrated in FIG. 7 can accurately measure a space-dependent variation of the diffusion coefficient of the particles that depends on the distance s from the gas-liquid interface. Moreover, the measurement device can measure the diffusion coefficient of the particles that depends on the distance s from the gas-liquid interface simultaneously (in real time) without any scanning of the reference mirror in order to change the distance s from the gas-liquid interface.

REFERENCE SIGNS LIST

1: measurement device, 10: low-coherence source, 20: optical coupler, 22: optical fiber, 24: optical fiber, 26: optical fiber, 28: optical fiber, 30: collimator, 32: collimator, 40: sample medium, 42: container, 50: reference mirror, 52: vibration element, 60: concave mirror, 62: diffraction grating, 64: concave mirror, 70: photodetector, 80: calculation section

**Claims**

1. A measurement device that performs a dynamic light scattering measurement process to characterize particles suspended in a sample medium, the measurement device comprising:

   an optical splitter section that splits light emitted from a low-coherence light source into two beams;
   an illumination section that applies one of the two beams split by the optical splitter section to the sample medium;
   a phase modulation section that modulates the other of the two beams split by the optical splitter section in phase;
   a spectrum acquisition section that resolves the beam subjected to the phase modulation and a scattered beam from the sample medium on a wavelength basis, and acquires a spectrum of interference light of the beam subjected to the phase modulation and the scattered beam; and
   a measurement section that performs the dynamic light scattering measurement process to characterize the particles on the basis of the acquired spectrum,
   the measurement section calculating an intensity signal corresponding to a position of each scattering point in the sample medium on the basis of the acquired spectrum, calculating a power spectrum corresponding to the position of each scattering point on the basis of a temporal variation of the intensity signal corresponding to the position of each scattering point, and calculating a diffusion coefficient of the particles corresponding to the position of each scattering point on the basis of the calculated power spectrum.

2. The measurement device as defined in claim 1,
   wherein the spectrum acquisition section includes a line sensor camera in which a plurality of light-receiving devices are arranged in a row, the spectrum acquisition section acquiring a detection signal detected by each of the plurality of light-receiving devices of the line sensor camera as the spectrum.

3. The measurement device as defined in claim 1 or 2,
   wherein the measurement section calculates the intensity signal corresponding to the position of each scattering point by calculating an inverse Fourier transform of the spectrum.

4. The measurement device as defined in any one of claims 1 to 3,
   wherein the measurement section calculates the power spectrum corresponding to the position of each scattering point by calculating a Fourier transform of the intensity signal corresponding to the position of each scattering point that varies in time series.

5. A measurement method that performs a dynamic light scattering measurement process to characterize particles suspended in a sample medium, the measurement method comprising:

a process that splits light emitted from a low-coherence light source into two beams, applies one of the two beams to the sample medium, and modulates the other of the two beams in phase;
a process that resolves the beam subjected to the phase modulation and a scattered beam from the sample medium on a wavelength basis, and acquires a spectrum of interference light of the beam subjected to the phase modulation and the scattered beam; and
a measurement process that performs the dynamic light scattering measurement process to characterize the particles on the basis of the acquired spectrum,
the measurement process calculating an intensity signal corresponding to a position of each scattering point in the sample medium on the basis of the acquired spectrum, calculating a power spectrum corresponding to the position of each scattering point on the basis of a temporal variation of the intensity signal corresponding to the position of each scattering point, and calculating a diffusion coefficient of the particles corresponding to the position of each scattering point on the basis of the calculated power spectrum.

FIG.1

FIG.2

FIG.3

FIG.4

FIG.5

FIG.6

FIG.7

FIG.8

EP 2 784 486 A1

<table>
<tr><td colspan="2" align="center">**INTERNATIONAL SEARCH REPORT**</td><td>International application No.<br>PCT/JP2012/077469</td></tr>
</table>

**A. CLASSIFICATION OF SUBJECT MATTER**
*G01N21/49*(2006.01)i, *G01N21/17*(2006.01)i

According to International Patent Classification (IPC) or to both national classification and IPC

**B. FIELDS SEARCHED**

Minimum documentation searched (classification system followed by classification symbols)
G01N21/49, G01N21/17

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-121600 A (Otsuka Electronics Co., Ltd.),<br>12 May 2005 (12.05.2005),<br>entire text; all drawings<br>& US 2005/0122528 A1 | 1-5 |
| A | JP 2003-65930 A (Japan Science and Technology Corp.),<br>05 March 2003 (05.03.2003),<br>entire text; all drawings<br>(Family: none) | 1-5 |
| A | JP 2007-198804 A (Shimadzu Corp.),<br>09 August 2007 (09.08.2007),<br>entire text; all drawings<br>(Family: none) | 1-5 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 December, 2012 (18.12.12) | Date of mailing of the international search report<br>08 January, 2013 (08.01.13) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 784 486 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005121600 A